# EUROPÄISCHE PATENTANMELDUNG

(11) **EP 4 236 192 A1**
(43) Veröffentlichungstag der Anmeldung: **30.08.2023**
(21) Anmeldenummer: 22158914.6
(22) Anmeldetag: 25.02.2022
(51) Int. Cl.: H04L 9/08, H04L 9/32, H04L 9/40, G06F 21/57

(54) **VORRICHTUNG UND VERFAHREN ZUM TAUSCHEN EINES ÖFFENTLICHEN SCHLÜSSELS IM ZUGE EINES FIRMWARE-UPDATES BEI FÜLLSTANDSENSOREN**

(71) Anmelder: VEGA Grieshaber KG, 77709 Wolfach (DE)
(72) Erfinder: MARX, Christian, 72213 Altensteig (DE); WENDLING, André, 67270 Melsheim (FR); GAISER, Martin, 72275 Alpirsbach (DE)
(74) Vertreter: Maiwald GmbH

(57) **Zusammenfassung**

Die vorliegende Erfindung betrifft eine Vorrichtung zum Tauschen eines öffentlichen Schlüssels im Zuge eines Firmware-Updates bei einem Füllstandsensor, wobei die Vorrichtung aufweist: eine Signiereinrichtung (10), welche dazu ausgebildet ist, ein Manifest umfassend einen Public Key zu erzeugen und den im Manifest abgelegten Public Key zu signieren; und eine Aktualisierungseinrichtung (20), welche dazu ausgebildet ist, einen bereits vorinstallierten Public Key eines vorherigen Manifests im Füllstandmessgerät mit dem signierten Public Key zu ersetzen.

## Beschreibung

### Gebiet der Erfindung

Die Erfindung betrifft eine Vorrichtung zum Tauschen eines öffentlichen Schlüssels im Zuge eines Firmware-Updates bei Füllstandsensoren. Ferner betrifft die vorliegende Erfindung ein Verfahren zum Tauschen eines öffentlichen Schlüssels im Zuge eines Firmware-Updates bei Füllstandsensoren sowie ein entsprechendes Programmelement und ein entsprechendes computerlesbares Speichermedium.

### Hintergrund

Die DE 102017111928 A beschreibt ein Verfahren zur autorisierten Aktualisierung eines Feldgeräts der Automatisierungstechnik.

Damit ein Füllstandmessgerät im Rahmen eines Firmware-Updates die vertrauenswürdige Herkunft der zu programmierenden Firmware bestätigen kann, prüft das Füllstandmessgerät eine digitale Signatur der zu programmierenden Firmware.

Diese digitale Signatur kann nur vom Hersteller des Füllstandmessgeräts erstellt werden. Durch die Prüfung der Signatur innerhalb des Füllstandmessgeräts kann die vertrauenswürdige Herkunft der Firmware zweifelsfrei bestätigt werden. Für das Verfahren der Signaturprüfung sind im Füllstandmessgerät bestimmte Informationen persistent abzulegen, beispielsweise ein Public Key.

Der Hersteller verfügt für die Erstellung der Signatur über einen Private Key, den er geheim hält. Für die Erstellung der digitalen Signatur können verschiedene Signieralgorithmen zum Einsatz kommen, beispielsweise elliptische Kurvenverfahren. Diesen Verfahren ist gemeinsam, dass zunächst ein Hash-Wert, beispielsweise ein SHA-256, über die Binärdaten des zu schützenden Bereichs berechnet wird.

Der berechnete Hash-Wert dient als Eingangswert für den Signieralgorithmus, der daraus eine Signatur ableitet. Diese kann mithilfe des zugehörigen Public Key verifiziert werden.

Im Falle einer Kompromittierung des Private Key, das heißt, wenn Dritte Kenntnis über den Private Key erlangen, können diese Personen im Namen des originalen Herstellers vertrauenswürdige Firmware-Pakete erstellen. Wenn das geschieht, muss der Hersteller ein neues Schlüsselpaar erzeugen.

Zukünftig wird der Hersteller dann alle Firmware-Update-Pakete mit dem Private Key des neuen Schlüsselpaars signieren. Damit diese Firmware-Update-Pakete von bestehenden Füllstandmessgeräten als vertrauenswürdig bestätigt werden können, muss in diesen Geräten im Rahmen des Firmware-Updates der persistent hinterlegte Public Key ersetzt werden.

Abgesehen von der Kompromittierung des Private Key können auch andere Gründe für den Austausch des Public Key im Gerät sprechen, beispielsweise, weil sie nur eine befristete Gültigkeitsdauer haben. Es stellt sich nun die Anforderung, wie der Public Key auf sichere Art und Weise, also erst nach zweifelsfreier Bestätigung der vertrauenswürdigen Herkunft, in das Füllstandmessgerät übertragen werden kann.

Nachteiliger Stand der Technik: Im einfachsten Fall ist der Public Key direkt im Programmspeicher der Firmware abgelegt. Um den Public Key auszutauschen, muss eine neue Firmware erstellt werden, die den neuen Public Key enthält.

Diese Firmware wird dann mithilfe des bestehenden Private Key signiert, um sie wie bisher als vertrauenswürdig zu kennzeichnen. Nach erfolgtem Firmware-Update ist der neue Public Key im Füllstandmessgerät enthalten und kann zukünftig für die Bestätigung der vertrauenswürdigen Herkunft von Firmware-Update-Paketen verwendet werden, die mit dem zugehörigen neuen Private Key signiert worden sind. Da die Firmware mit dem neuen Public Key typischerweise auch die Messapplikation, mindestens aber andere für die Gerätefunktion relevante Software-Teile enthält, sind Firmware-Updates bei manchen Anlagebetreibern nicht gern gesehen.

### Zusammenfassung der Erfindung

Es ist eine Aufgabe der vorliegenden Erfindung, eine verbesserte Vorrichtung zum Tauschen eines öffentlichen Schlüssels im Zuge eines Firmware-Updates bei einem Füllstandsensor bereitzustellen.

Die Aufgabe dieser Erfindung ist es, den Austausch des Public Key im Rahmen eines Firmware-Updates vorzunehmen, ohne die bestehende Firmware mit der Messapplikation des Füllstandmessgeräts oder anderen Gerätefunktionen austauschen zu müssen. Außerdem wird sichergestellt, dass der Public Key nur ausgetauscht wird, wenn die zweifelsfreie Herkunft bestätigt werden konnte.

Diese Aufgabe wird durch die Merkmale der unabhängigen Patentansprüche gelöst. Weiterbildungen der Erfindung ergeben sich aus den Unteransprüchen und der folgenden Beschreibung von Ausführungsformen.

Der im Gerät zu implementierende Public Key wird zu diesem Zweck nicht in der Firmware abgelegt, sondern stellt ein eigenständiges Binary, das sogenannte Manifest, des Firmware-Update-Pakets dar.

Damit die vertrauenswürdige Herkunft des Manifests bestätigt werden kann, wird es mit dem Private Key des Herstellers signiert. Vorteilhafterweise enthält das Manifest neben dem Public Key auch den Hash-Wert über das Binary der Firmware, sodass gleichzeitig die vertrauenswürdige Herkunft des Public Key als auch die vertrauenswürdige Herkunft der Firmware sichergestellt wird.

Optional kann das Manifest noch Hash-Werte anderer Firmware-Teile enthalten. Außerdem können optional andere Metadaten des Füllstandmessgeräts enthalten sein, beispielsweise Versionsnummern, die das Gesamtsystem bzw. einzelne Teile des Systems kennzeichnen.

Das Firmware-Update-Paket kann beispielsweise die folgenden Elemente umfassen:
- Binärdatei der Firmware
- Optional weitere Binärdateien mit Firmware-Teilen, z. B. für Systeme mit mehreren Mikroprozessoren
- Binärdatei des signierten Manifests
- Datei mit Metadaten über das Firmware-Update-Paket, z. B. über Zieladressen, Längen, Checksummen der verschiedenen Binärdateien

Das signierte Manifest des Firmware-Update-Pakets kann wie folgt aussehen:
- Public Key
- Hash-Wert, berechnet über die Binärdaten der Firmware
- Optional weitere Hash-Werte, berechnet über Binärdaten weiterer Firmware-Teile
- Optional Metadaten über die Firmware-Teile des Firmware-Update-Pakets, z. B. Versionsinformationen
- Signatur, berechnet über den Hash-Wert der Binärdaten des Manifests

Im Rahmen eines Firmware-Updates überträgt ein Update-Client, beispielsweise ein PC-Programm oder eine mobile App, nach einer festzulegenden Vorschrift bestimmte Binärdateien und Metadaten des Firmware-Update-Pakets über einen Kommunikationskanal zum Füllstandmessgerät.

Die Vorschrift kann beispielsweise festlegen, dass eine Binärdatei nur dann zum Füllstandmessgerät übertragen wird, wenn sich der jeweils zugehörige Firmware-Teil im Füllstandmessgerät unterscheidet.

Für den Vergleich eines Firmware-Teils mit der zugehörigen Binärdatei des Firmware-Update-Pakets kann beispielsweise ein Vergleich von Versionsnummern oder ein Vergleich von Hash-Werten über die jeweiligen Binärdaten vorgenommen werden.

Das Füllstandmessgerät speichert die empfangenen Bestandteile des Firmware-Update-Pakets nicht direkt im Programmspeicher, sondern legt sie in einem Zwischenspeicher ab.

Nach abgeschlossenem Empfang aller Bestandteile prüft das Füllstandmessgerät die Signatur des empfangenen signierten Manifests. Der für diese Signaturprüfung notwendige Public Key wird durch den Hersteller während des Fertigungsprozesses in einem definierten Speicherbereich, außerhalb anderer Firmware-Teile, in Form eines vorinstallierten signierten Manifests abgelegt.

Der für die Signaturprüfung verantwortliche Teil der Firmware greift auf den Public Key dieses signierten Manifests zu, um die Signatur des signierten Manifests des Firmware-Update-Pakets zu verifizieren. Nach erfolgreicher Signaturprüfung prüft das Füllstandmessgerät die Gültigkeit aller Hash-Werte des Manifests, indem es die Hash-Werte über alle Firmware-Teile berechnet oder andere Firmware-Teile mit der Berechnung der Hash-Werte beauftragt und die berechneten Hash-Werte mit den zugehörigen Hash-Werten im empfangenen signierten Manifest vergleicht.

Bei Übereinstimmung aller Paare von Hash-Werten gilt die vertrauenswürdige Herkunft des Firmware-Update-Pakets als bestätigt, und das Füllstandmessgerät wird die empfangenen Firmware-Teile in den zugehörigen Programmspeichern installieren bzw. andere Firmware-Teile mit der Installation der empfangenen Firmware-Teile beauftragen.

Das geprüfte signierte Manifest des Firmware-Update-Pakets wird durch das Füllstandmessgerät an den Ort des vorinstallierten signierten Manifests kopiert und ersetzt dieses. Auf diese Weise wird das geprüfte signierte Manifest des Firmware-Update-Pakets zukünftig für die Signaturprüfung von Firmware-Update-Paketen herangezogen. Ein Tausch des Public Key erfolgt somit einfach durch die Platzierung eines neuen Public Key im (mit dem bestehenden Private Key) signierten Manifest eines Firmware-Update-Pakets.

Anstelle eines Public Keys kann im vorinstallierten signierten Manifest und im signierten Manifest des Firmware-Update-Pakets ein digitales Zertifikat, zum Beispiel im Format X.509, zum Einsatz kommen. Dieses kann selbst-signiert oder durch eine Zertifikatsautorität signiert sein.

Die vorliegende Erfindung ermöglicht, dass der Public Key, der für die Signaturprüfung verwendet werden soll, nicht Teil der Firmware oder eines Firmware-Teils ist, sondern als vorinstalliertes signiertes Manifest in einem unabhängigen Speicherbereich vorliegt.

Auf diese Weise kann ein neues signiertes Manifest im Rahmen eines Firmware-Updates auf transparente Art und Weise - wie Binärdateien eines gewöhnlichen Firmware-Teils - zum Füllstandmessgerät übertragen werden und nach erfolgreicher Prüfung den Platz des vorinstallierten signierten Manifests einnehmen, was einen einfachen und effizienten Mechanismus darstellt, um den aktiven Public Key des Füllstandmessgeräts auszutauschen.

Wenn ein Firmware-Update-Paket neben der Binärdatei des signierten Manifests keine weiteren Firmware-Teile enthält, kann bei dieser Art des Schlüsseltauschs garantiert werden, dass keine funktionalen Komponenten des Füllstandmessgeräts verändert werden.

Ein erster Aspekt der Erfindung betrifft eine Vorrichtung zum Tauschen eines öffentlichen Schlüssels im Zuge eines Firmware-Updates bei einem Füllstandsensor, wobei die Vorrichtung aufweist: eine Signiereinrichtung, welche dazu ausgebildet ist, ein Manifest umfassend einen Public Key zu erzeugen und den im Manifest abgelegten Public Key zu signieren.

Ferner umfasst die Vorrichtung eine Aktualisierungseinrichtung, welche dazu ausgebildet ist, einen bereits vorinstallierten Public Key eines vorherigen Manifests im Füllstandmessgerät mit dem signierten Public Key zu ersetzen.

Gemäß einer Ausführungsform der Erfindung ist vorgesehen, dass die Signiereinrichtung dazu ausgebildet ist, als Signieralgorithmus einen Elliptische-Kurven-Kryptografie-Signieralgorithmus zu verwenden, vorzugsweise oder beispielsweise den Signieralgorithmus secp256k1, secp256r1, sepc384, oder sect571 zu verwenden.

Gemäß einer Ausführungsform der Erfindung ist vorgesehen, dass die Signiereinrichtung dazu ausgebildet ist, ein Manifest auszubilden und zu erzeugen, das Manifest vorzugsweise umfassend einen ersten Firmware-Teil mit sicherheitsgerichteten Funktionen, besonders bevorzugt Messapplikation, und ferner das Manifest umfassend einen zweiten Firmware-Teil mit nicht-sicherheitsgerichteten Funktionen.

Das Manifest kann neben dem Public Key den Hash-Wert über die Binärdaten eines Firmware-Teils mit sicherheitsgerichteten Funktionen und den Hash-Wert über die Binärdaten eines zweiten Firmware-Teils enthalten.

Das gesamte Manifest wird dann signiert - auf diese Weise wird die vertrauenswürdige Herkunft der Firmware-Teile und des Public Key sichergestellt. Es muss sich hier nicht notwendigerweise um die Messapplikation bzw. die nichtsicherheitsrelevanten Funktionen handeln.

Gemäß einer Ausführungsform der Erfindung ist vorgesehen, dass die Aktualisierungseinrichtung dazu ausgebildet ist, das Manifest auf verschiedene Mikroprozessoren des Füllstandsensors zu verteilen.

Gemäß einer Ausführungsform der Erfindung ist vorgesehen, dass die Signiereinrichtung dazu ausgebildet ist, das Manifest umfassend den Public Key als binäre Beschreibung zu erzeugen, wobei der Public Key beispielsweise als ASN.1-Struktur im DER-Format eingebettet wird.

Gemäß einer Ausführungsform der Erfindung ist vorgesehen, dass die Vorrichtung für Feldgeräte ausgebildet ist.

Ein weiterer Aspekt der vorliegenden Erfindung betrifft ein Verfahren zum Tauschen eines öffentlichen Schlüssels im Zuge eines Firmware-Updates bei einem Füllstandsensor.

Als ein erster Schritt des Verfahrens Erzeugen eines Manifests umfassend einen Public Key und Signieren des im Manifest abgelegten Public Keys.

Als ein zweiter Schritt des Verfahrens erfolgt ein Ersetzen eines bereits vorinstallierten Public Keys eines vorherigen Manifests im Füllstandmessgerät mit dem signierten Public Key.

Gemäß einer Ausführungsform der Erfindung ist vorgesehen, dass zunächst die Signatur des signierten Public Keys geprüft wird und erst nach erfolgreicher Prüfung das Ersetzen des vorinstallierten Public Keys erfolgt.

An dieser Stelle sei darauf hingewiesen, dass gemäß einem weiteren Aspekt der Erfindung die oben und im Folgenden im Hinblick auf das Feldgerät bzw. auf die Vorrichtung beschriebenen Merkmale auch als Verfahrensschritte implementiert werden können.

Ebenso können die oben und im Folgenden beschriebenen Verfahrensschritte von bestimmten Ausführungsformen des Feldgeräts bzw. der Vorrichtung durchgeführt werden.

Gemäß einem weiteren Aspekt der Erfindung ist ein Programmelement angegeben, das, wenn es auf einem Prozessor des Feldgeräts bzw. der Vorrichtung ausgeführt wird, das Feldgerät bzw. Vorrichtung anleitet, die oben und im Folgenden beschriebenen Schritte durchzuführen.

Gemäß einer weiteren Ausführungsform der Erfindung ist ein computerlesbares Medium angegeben, auf dem ein oben beschriebenes Programmelement gespeichert ist.

Das Programmelement kann Teil einer Software sein, die auf einem Prozessor gespeichert ist. Weiterhin umfasst diese Ausführungsform der Erfindung ein Programmelement, welches dem Verfahren bzw. einzelnen der oben und im Folgenden beschriebenen Verfahrensschritte.

Gemäß einer weiteren Ausführungsform der Erfindung kann die Vorrichtung auch als ein verteiltes System oder als verteilte Computerumgebung verwirklicht werden.

Im Folgenden werden mit Verweis auf die Figuren weitere Ausführungsformen der Erfindung beschrieben. Werden in der folgenden Figurenbeschreibung dieselben Bezugszeichen verwendet, so bezeichnen diese gleiche oder ähnliche Elemente. Die Darstellungen in den Figuren sind schematisch und nicht maßstäblich.

### Kurze Beschreibung der Figuren

Fig. 1 zeigt eine Vorrichtung zum Tauschen eines öffentlichen Schlüssels im Zuge eines Firmware-Updates bei einem Füllstandsensor gemäß einer Ausführungsform der Erfindung.
Fig. 2 zeigt ein Flussdiagramm eines Verfahrens zum Tauschen eines öffentlichen Schlüssels im Zuge eines Firmware-Updates bei einem Füllstandsensor gemäß einer Ausführungsform der Erfindung.
Fig. 3 zeigt ein Layout des signierten Manifests gemäß einer Ausführungsform der Erfindung.
Fig. 4 zeigt ein Layout des Firmware-Update-Pakets gemäß einer Ausführungsform der Erfindung.
Fig. 5 zeigt ein Flussdiagramm einer Signaturprüfung gemäß einer Ausführungsform der Erfindung.
Fig. 6 zeigt ein Flussdiagramm eines Austausches von Firmwares und signiertem Manifest im Rahmen eines Firmware-Updates gemäß einer Ausführungsform der Erfindung.

### Detaillierte Beschreibung von Ausführungsformen

Die Darstellungen in den Figuren sind schematisch und nicht maßstäblich.

Werden in der folgenden Figurenbeschreibung in verschiedenen Figuren die gleichen Bezugszeichen verwendet, so bezeichnen diese gleiche oder ähnliche Elemente. Gleiche oder ähnliche Elemente können aber auch durch unterschiedliche Bezugszeichen bezeichnet sein.

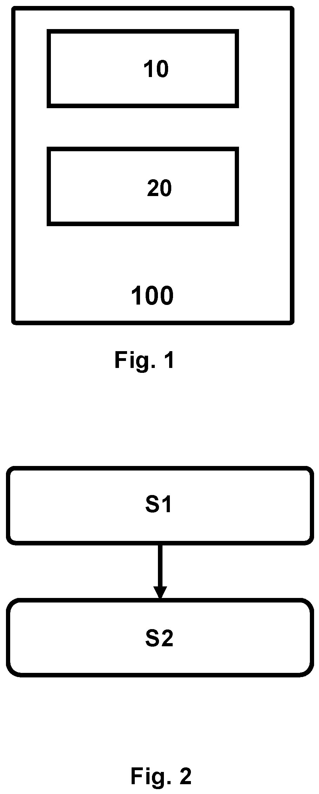

Fig. 1 zeigt eine Vorrichtung zum Tauschen eines öffentlichen Schlüssels im Zuge eines Firmware-Updates bei einem Füllstandsensor gemäß einer Ausführungsform der Erfindung.

Eine Vorrichtung 100 zum Tauschen eines öffentlichen Schlüssels im Zuge eines Firmware-Updates bei einem Füllstandsensor umfasst eine Signiereinrichtung 10 und eine Aktualisierungseinrichtung 20.

Die Signiereinrichtung 10 ist dazu ausgebildet, ein Manifest umfassend einen Public Key zu erzeugen und den im Manifest abgelegten Public Key zu signieren; und

Die Aktualisierungseinrichtung 20 ist dazu ausgebildet, einen bereits vorinstallierten Public Key eines vorherigen Manifests im Füllstandmessgerät mit dem signierten Public Key zu ersetzen.

Fig. 2 zeigt ein Flussdiagramm eines Verfahrens zum Tauschen eines öffentlichen Schlüssels im Zuge eines Firmware-Updates bei einem Füllstandsensor gemäß einer Ausführungsform der Erfindung.

Als ein erster Schritt des Verfahrens Erzeugen S1 eines Manifests umfassend einen Public Key und ein Signieren des im Manifest abgelegten Public Keys.

Als ein zweiter Schritt des Verfahrens erfolgt ein Ersetzen S2 eines bereits vorinstallierten Public Keys eines vorherigen Manifests im Füllstandmessgerät mit dem signierten Public Key.

Gemäß einer Ausführungsform der Erfindung ist vorgesehen, dass zunächst die Signatur des signierten Public Keys geprüft wird und erst nach erfolgreicher Prüfung das Ersetzen des vorinstallierten Public Keys erfolgt.

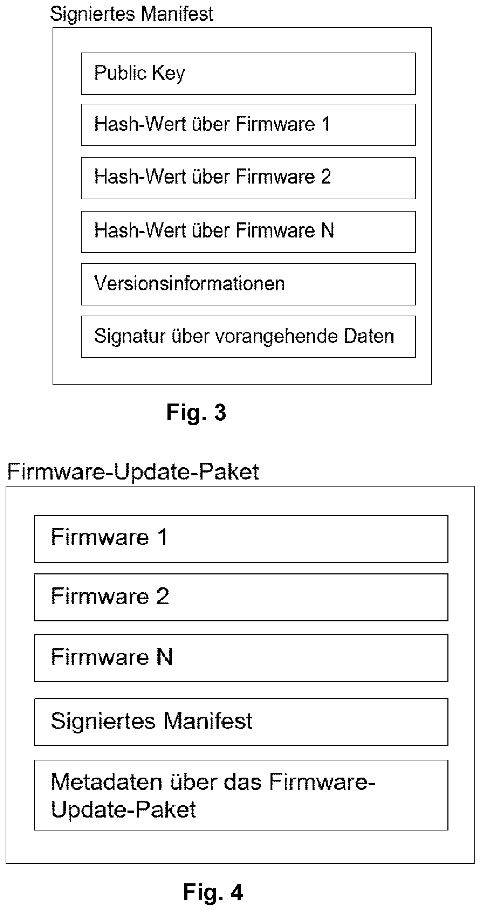

Fig. 3 zeigt ein Layout des signierten Manifests gemäß einer Ausführungsform der Erfindung.

Fig. 4 zeigt ein Layout des Firmware-Update-Pakets gemäß einer Ausführungsform der Erfindung.

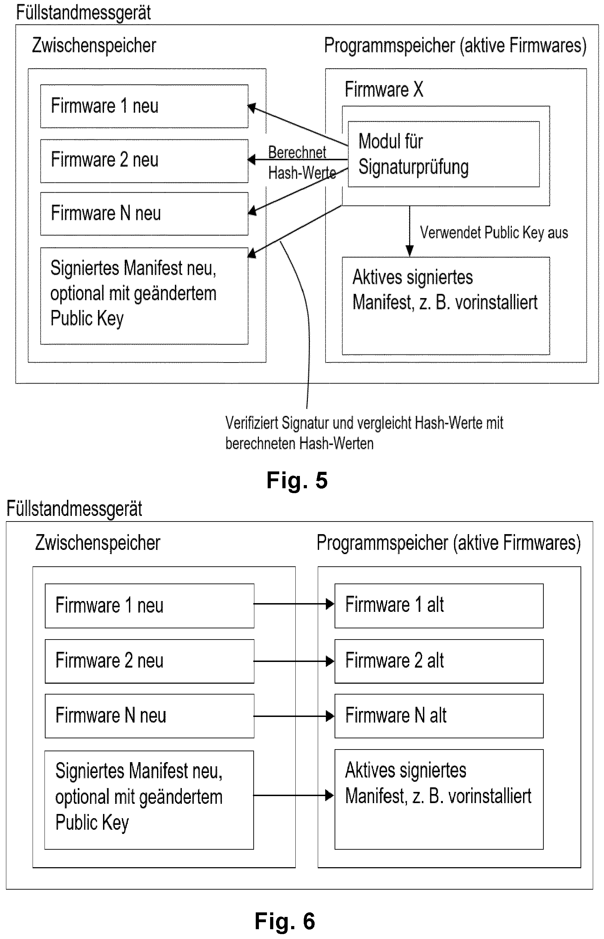

Fig. 5 zeigt ein Flussdiagramm einer Signaturprüfung gemäß einer Ausführungsform der Erfindung.

Fig. 6 zeigt ein Flussdiagramm eines Austausches von Firmware Dateien und signiertem Manifest im Rahmen eines Firmware-Updates gemäß einer Ausführungsform der Erfindung.

Ergänzend sei darauf hingewiesen, dass "umfassend" und "aufweisend" keine anderen Elemente oder Schritte ausschließt und die unbestimmten Artikel "eine" oder "ein" keine Vielzahl ausschließen.

Ferner sei darauf hingewiesen, dass Merkmale oder Schritte, die mit Verweis auf eines der obigen Ausführungsbeispiele beschrieben worden sind, auch in Kombination mit anderen Merkmalen oder Schritten anderer oben beschriebener Ausführungsbeispiele verwendet werden können. Bezugszeichen in den Ansprüchen sind nicht als Einschränkungen anzusehen.

## Patentansprüche

1. Vorrichtung (100) zum Tauschen eines öffentlichen Schlüssels im Zuge eines Firmware-Updates bei einem Füllstandsensor, wobei die Vorrichtung aufweist:
eine Signiereinrichtung (10), welche dazu ausgebildet ist, ein Manifest umfassend einen Public Key zu erzeugen und den im Manifest abgelegten Public Key zu signieren; und
eine Aktualisierungseinrichtung (20), welche dazu ausgebildet ist, einen bereits vorinstallierten Public Key eines vorherigen Manifests im Füllstandmessgerät mit dem signierten Public Key zu ersetzen.

2. Vorrichtung nach Anspruch 1,
wobei die Signiereinrichtung (10) dazu ausgebildet ist, als Signieralgorithmus einen Elliptische-Kurven-Kryptografie-Signieralgorithmus zu verwenden, vorzugsweise ist die Signiereinrichtung (10) dazu ausgebildet, den Signieralgorithmus secp256k1, secp256r1, sepc384, oder sect571 zu verwenden.

3. Vorrichtung nach Anspruch 1 oder 2,
wobei die Signiereinrichtung (10) dazu ausgebildet ist, ein Manifest zu erzeugen, das Manifest vorzugsweise umfassend einen ersten Firmware-Teil mit sicherheitsgerichteten Funktionen, besonders bevorzugt Messapplikation, und einen zweiten Firmware-Teil mit nicht-sicherheitsgerichteten Funktionen.

4. Vorrichtung nach einem der vorhergehenden Ansprüche,
wobei die Aktualisierungseinrichtung (20) dazu ausgebildet ist, das Manifest auf verschiedene Mikroprozessoren des Füllstandsensors zu verteilen.

5. Vorrichtung nach einem der vorhergehenden Ansprüche, wobei die Signiereinrichtung (10) dazu ausgebildet ist, das Manifest umfassend den Public Key als binäre Beschreibung zu erzeugen, wobei der Public Key beispielsweise als ASN.1-Struktur im DER-Format eingebettet wird.

6. Vorrichtung nach einem der vorhergehenden Ansprüche, wobei die Vorrichtung für Feldgeräte ausgebildet ist.

7. Feldgerät aufweisend eine Vorrichtung nach einem der vorhergehenden Ansprüche.

8. Computernetzwerksegment aufweisend eine Vielzahl an Vorrichtungen nach einem der vorhergehenden Ansprüche 1 bis 6.

9. Verfahren zum Tauschen eines öffentlichen Schlüssels im Zuge eines Firmware-Updates bei einem Füllstandsensor, das Verfahren umfassend folgende Verfahrensschritte:
Erzeugen (S1) eines Manifests umfassend einen Public Key und Signieren des im Manifest abgelegten Public Keys; und
Ersetzen (S2) eines bereits vorinstallierten Public Keys eines vorherigen Manifests im Füllstandmessgerät mit dem signierten Public Key.

10. Verfahren zum Tauschen eines öffentlichen Schlüssels im Zuge eines Firmware-Updates bei einem Füllstandsensor nach Anspruch 9,
wobei vor dem Schritt des Ersetzens (S2), ferner die Signatur des signierten Public Keys geprüft wird und nach erfolgreicher Prüfung das Ersetzen des bereits vorinstallierten Public Keys erfolgt.

11. Computerprogrammprodukt, umfassend Befehle, die bei der Ausführung des Programms durch einen Computer diesen veranlassen, die Schritte des Verfahrens nach Anspruch 9 oder 10 auszuführen.

12. Computerlesbares Speichermedium, umfassend Befehle, die bei der Ausführung durch einen Computer diesen veranlassen, die Schritte des Verfahrens nach Anspruch 9 oder 10 auszuführen.
